# DEMANDE DE BREVET EUROPEEN

(11) **EP 1 542 469 A1**
(43) Date de publication de la demande: **15.06.2005**
(21) Numéro de dépôt: 03293059.6
(22) Date de dépôt: 08.12.2003
(51) Int. Cl.: H04N 7/16, H04N 5/445

(54) **Dispositif d'accès conditionnel à un récepteur/décodeur dans certaines plages horaires**

(71) Demandeur: Canal + Technologies, 75906 Paris Cedex 15 (FR)
(72) Inventeur: Lebouc, Patrick c/o Canal + Technologies, 75906 PARIS CEDEX 15 (FR); Beaunoir, Nicolas c/o Canal + Technologies, 75906 PARIS CEDEX 15 (FR)
(74) Mandataire: Rosenberg, Muriel Sylvie

(57) **Abrégé**

Ce dispositif de contrôle d'accès à un récepteur/décodeur (102) comporte diverses unités (324, 326, 328, 330, 332) pour soumettre à un accès conditionnel l'utilisation du récepteur/décodeur pendant au moins une plage horaire définie par un utilisateur.

## Description

La présente invention se rapporte à un dispositif d'accès conditionnel à un récepteur/décodeur dans certaines plages horaires.

Elle appartient au domaine de la protection, par un utilisateur, de l'accès à des programmes diffusés par un système de télévision numérique comportant un dispositif récepteur/décodeur.

Par exemple, dans le cadre du contrôle parental, les parents peuvent souhaiter que leurs enfants ne regardent pas la télévision, pas plus qu'un programme enregistré par l'intermédiaire du récepteur/décodeur, après une certaine heure le soir, afin qu'ils se couchent tôt, ou pendant une certaine durée dans la journée, alors qu'ils ont des devoirs à faire.

Les parents peuvent aussi souhaiter que d'autres personnes n'utilisent pas leur récepteur/décodeur en leur absence.

Le terme "système de télévision numérique" inclut ici par exemple les systèmes satellite, câble, terrestre, et analogues.

Le terme "dispositif récepteur/décodeur" inclut ici un dispositif récepteur pour recevoir soit des signaux codés soit des signaux non codés, par exemple des signaux audio/vidéo, de préférence au format MPEG. Ces signaux peuvent être transmis par différents moyens. Le dispositif récepteur/décodeur peut être un dispositif appelé aussi "set-top box" en anglo-saxon, connecté ou intégré à un poste de télévision. Le dispositif récepteur/décodeur peut être fixe ou portable.

Le terme "MPEG" fait référence ici au standard de transmission de données développé par le groupe de travail "Motion Pictures Expert Group" de l'International Standard Organisation et en particulier mais non exclusivement le standard MPEG-2 développé pour les applications de télévision numérique et le standard MPEG-4 ainsi que les autres standards MPEG compatibles. Dans la présente invention, le terme MPEG inclut toutes les variantes, modifications, et développements de formats MPEG applicables à la transmission de données numériques incluant le standard DVB (Digital Vidéo Broadcast).

Il existe à l'heure actuelle des systèmes de contrôle d'accès permettant de verrouiller par mot de passe l'accès à une chaîne de télévision donnée. De tels systèmes ne prévoient cependant pas la possibilité d'un accès conditionnel en fonction de l'heure ou d'une plage horaire particulière. Par conséquent, ces systèmes présentent l'inconvénient, pour un utilisateur ne connaissant pas le code d'accès, d'empêcher cet utilisateur d'accéder à une chaîne quelle que soit l'heure, alors que les programmes dont on souhaite restreindre l'accès n'occupent qu'une plage horaire très limitée. Ainsi, pour permettre à cet utilisateur de regarder d'autres programmes sur cette même chaîne, on sera contraint de lui divulguer le code d'accès, puis de modifier ce code ultérieurement.

On connaît aussi par le document WO-A-02 01864 un système de contrôle parental qui permet de verrouiller l'accès à un programme de télévision particulier ou un contenu de site Web spécifique ou un certain fichier d'ordinateur. Ce document antérieur mentionne brièvement l'éventualité d'un verrouillage de certaines chaînes uniquement à certaines dates et heures. Il ne contient néanmoins aucune description de la réalisation d'un tel verrouillage en fonction de l'heure.

L'invention a pour but de remédier aux inconvénients précités.

Dans ce but, la présente invention propose un dispositif de contrôle d'accès dans un récepteur/décodeur, remarquable en ce qu'il comporte diverses unités pour soumettre à un accès conditionnel l'utilisation du récepteur/décodeur pendant au moins une plage horaire définie par un utilisateur.

Ainsi, l'invention permet de subordonner à la saisie d'un code d'accès l'utilisation du récepteur/décodeur pendant une ou plusieurs plages horaires choisies par l'utilisateur, qu'il s'agisse d'utiliser le récepteur/décodeur pour visualiser un programme ou pour enregistrer un programme et ce, indépendamment de la chaîne de télévision concernée. Cela permet de cibler le verrouillage du récepteur/décodeur, non seulement en fonction d'un programme particulier, ayant une certaine durée, mais aussi en fonction d'une heure donnée, jugée par exemple trop tardive par les parents pour que leurs enfants regardent la télévision ou un programme enregistré ; cela permet aussi à l'utilisateur habituel du récepteur/décodeur d'empêcher que d'autres personnes s'en servent pendant une certaine période où cet utilisateur habituel sera absent.

Avantageusement, le dispositif de contrôle d'accès comporte une unité de gestion d'informations personnelles pour mémoriser le début et la fin de chacune des plages horaires précitées et pour recevoir un code secret défini par un utilisateur, associé à chacune de ces plages horaires, les codes secrets conditionnant l'utilisation du récepteur/décodeur pendant les plages horaires associées.

Cela permet à l'utilisateur de personnaliser de façon souple et aisée le mode d'accès à son récepteur/décodeur.

Avantageusement, le dispositif de contrôle d'accès comporte en outre une unité de gestion de contrôle parental adaptée à recevoir les codes secrets en provenance de l'unité de gestion d'informations personnelles et à les mémoriser.

Cette unité de gestion de contrôle parental garantit la sécurité d'accès au récepteur/décodeur, en assurant la gestion des codes secrets saisis par les utilisateurs et en conditionnant l'accès à un certain nombre de ressources et de fonctionnalités du récepteur/décodeur.

Avantageusement, l'unité de gestion de contrôle parental est adaptée, en cours de visualisation, par un utilisateur, de programmes diffusés ou précédemment enregistrés par le récepteur/décodeur, lorsque l'heure de diffusion ou la plage horaire initiale d'enregistrement appartient au moins en partie à une des plages horaires précitées, à inviter l'utilisateur à saisir le code secret associé à cette plage horaire, la visualisation étant suspendue tant que le code secret correct n'est pas saisi.

Avantageusement, l'unité de gestion de contrôle parental est adaptée, lorsqu'un utilisateur met en marche le récepteur/décodeur pendant une des plages horaires précitées, à inviter l'utilisateur à saisir le code secret associé à cette plage horaire, la visualisation et l'enregistrement de programmes étant impossibles tant que le code secret correct n'est pas saisi.

Cette unité de gestion de contrôle parental permet donc d'interdire à toute personne ne connaissant pas le code parental la visualisation d'un programme en direct ou précédemment enregistré, si l'horaire de diffusion de ce programme appartient au moins en partie à une des plages horaires précitées.

Avantageusement, l'unité de gestion de contrôle parental est adaptée, lorsqu'un utilisateur programme sur le récepteur/décodeur un enregistrement devant avoir lieu au moins en partie pendant au moins une des plages horaires précitées, à inviter l'utilisateur à saisir les codes secrets associés aux plages horaires concernées, la programmation étant impossible tant que les codes secrets corrects ne sont pas saisis.

Cette unité de gestion de contrôle parental permet donc d'interdire à toute personne ne connaissant pas le code parental l'enregistrement d'un programme si l'horaire de diffusion de ce programme appartient au moins en partie à une des plages horaires précitées.

Avantageusement, le dispositif de contrôle d'accès conforme à l'invention comporte en outre une unité de gestion d'alarme adaptée à mémoriser l'heure de début d'au moins une des plages horaires précitées et à avertir l'unité de gestion de contrôle parental lorsque l'heure courante est équivalente à l'heure mémorisée.

Avantageusement, le dispositif de contrôle d'accès conforme à l'invention comporte en outre une unité de gestion d'initialisation adaptée à initialiser l'unité de gestion d'informations personnelles lorsqu'un utilisateur met en marche le récepteur/décodeur.

Cela permet ainsi de configurer l'unité de gestion d'informations personnelles pour l'ensemble des utilisations futures de celle-ci.

Avantageusement, le dispositif de contrôle d'accès conforme à l'invention comporte en outre une unité de gestion d'enregistrement adaptée à avertir l'unité de gestion d'informations personnelles lorsqu'un utilisateur programme un enregistrement sur le récepteur/décodeur.

La présente invention vise aussi un récepteur/décodeur comportant un dispositif tel que ci-dessus.

Les caractéristiques particulières et les avantages du récepteur/décodeur étant similaires à ceux du dispositif selon l'invention, ils ne sont pas rappelés ici.

D'autres aspects et avantages de l'invention apparaîtront à la lecture de la description détaillée qui suit de modes particuliers de réalisation, donnés à titre d'exemple non limitatif. La description se réfère aux dessins qui l'accompagnent, dans lesquels :
- la figure 1 représente schématiquement un système de télévision numérique selon l'art antérieur ;
- la figure 2 représente schématiquement la structure d'un terminal selon l'art antérieur ;
- la figure 3 représente schématiquement l'architecture globale d'un dispositif récepteur/décodeur comportant un dispositif d'accès conditionnel conforme à la présente invention, dans un mode particulier de réalisation ; et
- les figures 4a à 4f sont des synoptiques illustrant les divers scénarii de mise en oeuvre d'un dispositif d'accès conditionnel conforme à la présente invention, dans des modes particuliers de réalisation.

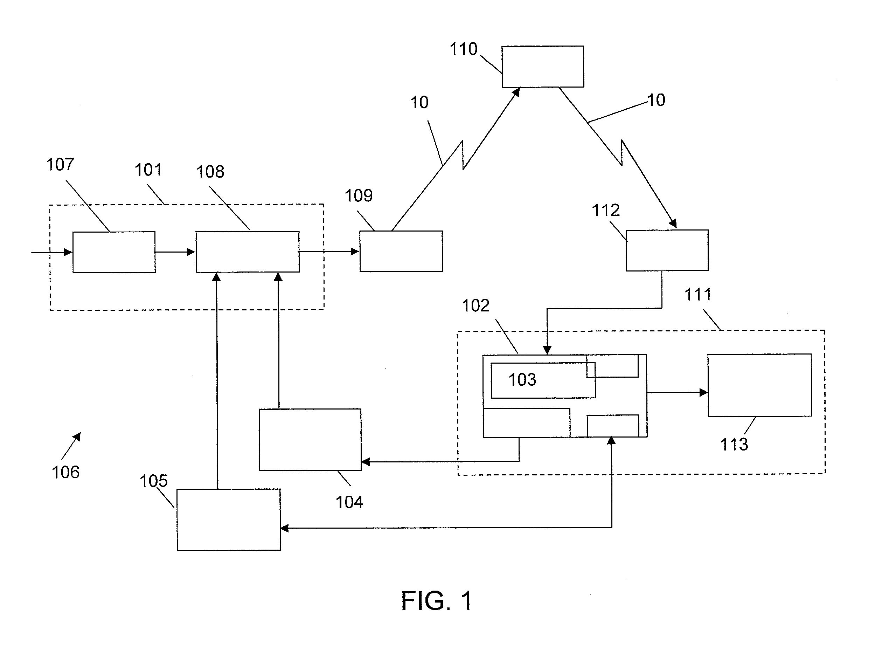

En référence à la **figure 1**, un système de communication, de type télévision numérique 106, conforme à l'art antérieur, comprend un centre de diffusion 101 et au moins un terminal 111 appartenant à un parc de terminaux.

Le terminal 111 comprend un dispositif récepteur/décodeur 102 possédant une architecture logicielle et/ou matérielle 103, et un équipement de visualisation 113.

Le système de communication 106 comprend en outre, d'une part, un dispositif interactif 104 jouant le rôle de voie de retour, et d'autre part, un système d'accès conditionnel 105.

D'une manière générale, le système de télévision numérique 106 utilise un système de compression de type MPEG-2 pour transmettre des signaux numériques compressés.

Au niveau du centre de diffusion 101, un organe compresseur 107 reçoit un flux numérique, typiquement un flux de signaux audio et/ou vidéo, et transforme ce flux en signaux numériques au format MPEG-2.

L'organe compresseur 107 est connecté par une liaison à un organe formant multiplexeur et embrouilleur 108 ("*scrambler*" selon la terminologie anglaise).

L'organe formant multiplexeur et embrouilleur 108 reçoit une pluralité de sources transformées et/ou des données (application et données d'application), rassemble ces sources et/ou données en un unique canal, et transmet les flux numériques compressés à un émetteur (modulateur/parabole d'émission) 109 du centre de diffusion 101.

L'émetteur 109 transmet les flux de données 10 via une première liaison (satellite, terrestre, câble, combinaison de deux ou plusieurs moyens de transmission) vers une borne 110 qui va les retransmettre via une seconde liaison vers des récepteurs 112, par exemple, au travers de paraboles ou antennes.

Les flux de données 10 sont transmis sur une plage de fréquences prédéterminée, appelée bande passante. Celle-ci est décomposée en un certain nombre de flux élémentaires correspondant à un service.

Les signaux reçus par les récepteurs (antennes) 112 sont transmis au dispositif récepteur/décodeur 102 du terminal 111 de l'utilisateur sur lequel est connecté l'équipement de visualisation 113, qui est par exemple un poste de télévision.

Le dispositif récepteur/décodeur 102 filtre une portion du flux global de données correspondant au service attendu par l'utilisateur.

Ensuite, le dispositif récepteur/décodeur 102 décode le signal MPEG-2 compressé en un flux de données vidéo ou autre pour l'équipement de visualisation 113.

Le dispositif interactif 104 est connecté à l'organe formant multiplexeur et embrouilleur 108 d'une part, et au dispositif récepteur/décodeur 102 d'autre part. En pratique, le dispositif interactif 104 est localisé partiellement dans le centre de diffusion 101 et partiellement dans le terminal 111. Le dispositif interactif 104 permet à l'utilisateur d'interagir avec un certain nombre d'applications via un canal de retour. Le canal ou voie de retour peut être par exemple un canal de communication de type réseau commuté ou PSTN (*Public* *Switched Telephone Network*) ou un canal de communication mobile de type GPRS ou UMTS.

Le système d'accès conditionnel 105 est aussi connecté à l'organe formant multiplexeur et embrouilleur 108 et au dispositif récepteur/décodeur 102. Le système d'accès conditionnel 105 est également localisé partiellement dans le centre de diffusion 101 et partiellement dans le dispositif récepteur/décodeur 102. Le système d'accès conditionnel 105 permet à l'utilisateur d'accéder aux transmissions de données de télévision numérique diffusées par un ou plusieurs fournisseurs.

Le système d'accès conditionnel est articulé autour d'une carte à puce détenue par l'utilisateur. La carte à puce est capable de décrypter les messages en relation avec des offres commerciales. La carte à puce communique avec un lecteur de carte à puce (non représenté) équipant le dispositif récepteur/décodeur 102.

En pratique, une partie des programmes transmis par le centre de diffusion 101 sont codés, les conditions et clés de cryptage appliquées à une transmission étant déterminées par le système de contrôle d'accès.

D'une manière générale, les données codées sont transmises avec un mot de contrôle pour décoder les données.

Le mot de contrôle est lui-même crypté par une clé d'exploitation et transmis sous une forme cryptée.

Les données codées et le mot de contrôle crypté sont reçus par le dispositif récepteur/décodeur 102 ayant accès à la clé d'exploitation enregistrée dans la carte à puce insérée dans le dispositif récepteur/décodeur 102, pour décrypter le mot de contrôle crypté et ensuite décoder les données transmises.

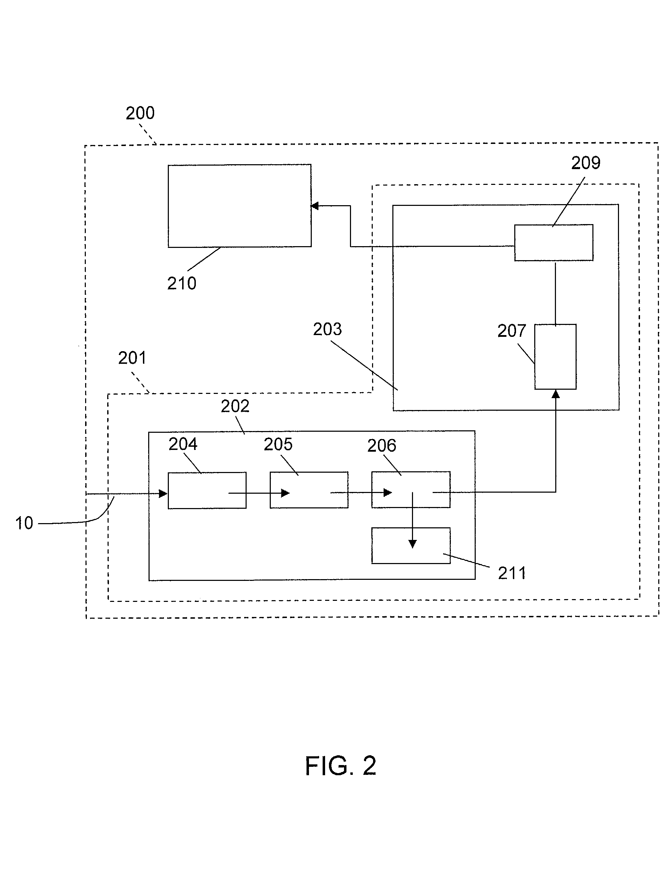

En référence à la **figure 2**, la structure d'un terminal utilisateur 200 classique comprend un dispositif récepteur/décodeur 201 possédant une partie formant récepteur 202 et une partie formant décodeur 203. Le terminal 200 reçoit le flux de données 10 transmis par la source de diffusion. La partie formant décodeur 203 comprend une mémoire 207 et une unité de traitement 209 communiquant avec un équipement de visualisation 210.

La partie formant récepteur 202 comprend au moins une chaîne de réception formée par un tuner 204, un démodulateur 205 et un démultiplexeur 206. Le démultiplexeur 206 réalise la séparation des différentes informations transmises dans le flux (mot de contrôle crypté, composantes embrouillées) afin de pouvoir les désembrouiller ultérieurement.

Selon l'information reçue, le démultiplexeur 206 transmet, d'une part, des informations de signalisation à une unité de traitement de la signalisation 211 et, d'autre part, des données audio/visuelles dans la mémoire tampon 207.

L'information lue dans la mémoire 207 est ensuite lue par l'unité de traitement 209 qui désembrouille le programme, si celui-ci est embrouillé, et si l'utilisateur a les droits d'accès correspondants.

Le résultat du traitement est ensuite acheminé vers l'équipement de visualisation 210.

L'unité de traitement de la signalisation 211 a pour rôle de traiter l'ensemble des informations de signalisation.

Par exemple, les informations de signalisation incluent la signalisation de type PSI (*Program Specific Information*), la signalisation SI (*Signalisation Information*) présentant un moyen de navigation au sein d'un ensemble de services et d'événements, ainsi que les tables conformes à la norme DVB (*Digital Video Broadcasting*), telles que la table SDT (*Service Description Table*), la table BAT (*Bouquet Association Table*), la table NIT (*Network Information Table*), etc.

La mémoire 207 est une mémoire temporaire qui est apte à contenir l'ensemble des informations devant permettre à la partie formant décodeur 203 de reconstituer le signal à visualiser.

En variante, un terminal peut comprendre deux chaînes de réception comportant chacune un tuner, un démodulateur et un démultiplexeur. Un tel dispositif récepteur/décodeur à deux chaînes de réception peut ainsi permettre l'enregistrement d'un premier flux de données sur une première chaîne de réception, et en parallèle la visualisation d'un second flux de données à partir de la seconde chaîne de réception.

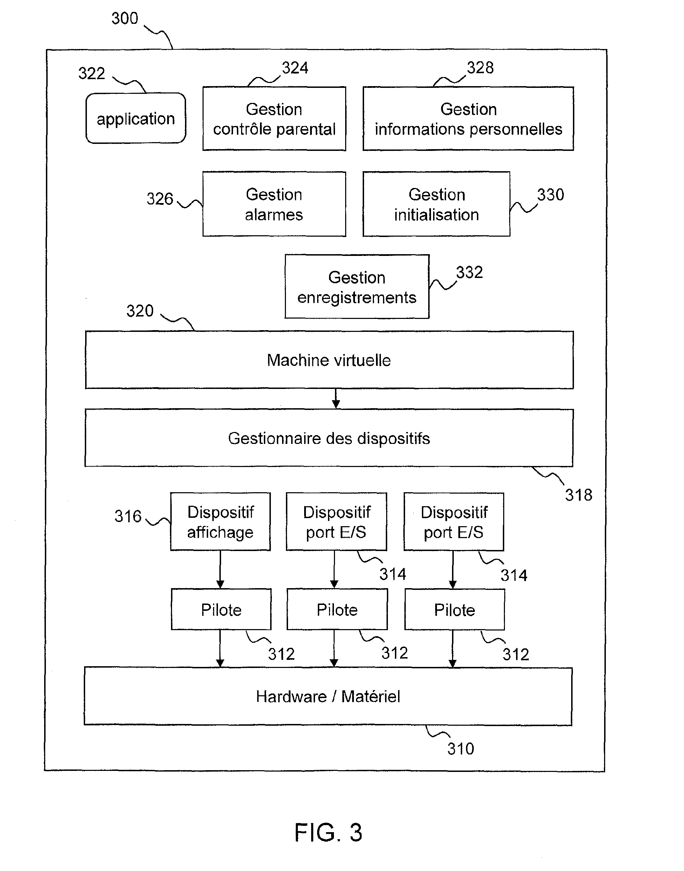

En référence à la **figure 3**, l'architecture globale de la plate-forme 300 contenant un dispositif récepteur/décodeur ayant un dispositif d'accès conditionnel conforme à la présente invention comprend plusieurs couches.

Une première couche 322 dite "couche application" fournit les fonctionnalités des applications exécutées par la plate-forme sur un dispositif récepteur/décodeur.

Cette couche applicative 322 est sous le contrôle des dispositifs de fournisseurs de services.

Une application 322 peut :
- être associée à un canal, à un groupe de canaux ou à tous les canaux ;
- être résidente ou dynamiquement chargée dans le dispositif récepteur/décodeur ;
- s'exécuter indépendamment ou en conjonction avec le flux audio/vidéo/données d'un ou plusieurs programmes de télévision ; et/ou
- effectuer des requêtes sur des serveurs via une voie de retour et afficher les réponses à l'écran de visualisation.

La plate-forme comprend également une machine virtuelle 320 fournissant entre autres un interpréteur de codes intermédiaires, un support de mémorisation et différents répertoires de traitement.

La plate-forme comprend en outre un gestionnaire de dispositifs 318 et les dispositifs correspondants (dispositif d'affichage 316, dispositif d'entrées/sorties 314).

Le gestionnaire de dispositifs 318 est une interface normalisée disposée entre les applications interactives 322 et les éléments physiques (316, 314, pilotes 312, partie matérielle 310) du dispositif récepteur/décodeur. Le gestionnaire de dispositifs 318 fournit l'interopérabilité pour les applications interactives avec le matériel du récepteur/décodeur.

Conformément à la présente invention, au niveau de la couche application, il existe :
- une unité 324 de gestion de contrôle parental : elle assure la gestion d'un code appelé "code parent". Ce code peut être utilisé pour conditionner l'accès à un certain nombre de ressources et de fonctionnalités du récepteur/décodeur : seules les personnes en mesure de saisir correctement ce code ont accès aux ressources et aux fonctionnalités protégées ;
- une unité 326 de gestion d'alarmes : elle permet d'enregistrer des alarmes constituées d'une date, d'un horaire et d'une action. Elle garantit le déclenchement de cette action lorsque la date et l'heure courantes sont équivalentes à la date et l'heure de l'alarme ;
- une unité 328 de gestion d'informations personnelles : elle permet à l'utilisateur de configurer un certain nombre de préférences d'utilisation de son récepteur/décodeur ;
- une unité 330 de gestion d'initialisation : elle gère l'ensemble des opérations d'initialisation du terminal lors de son démarrage à la suite d'une mise en veille ;
- une unité 332 de gestion d'enregistrements : elle gère l'enregistrement de programmes audio/vidéo et la visualisation de ces enregistrements.

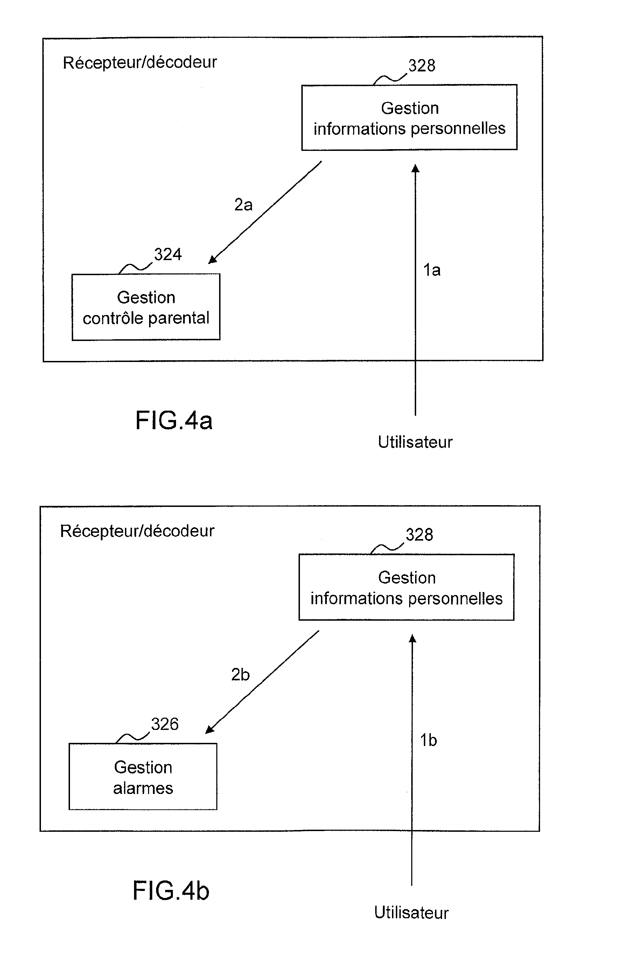

On décrit maintenant, en liaison avec les figures 4a à 4f, différentes situations dans lesquelles le dispositif de contrôle d'accès conforme à la présente invention est mis en oeuvre.

La **figure 4a** illustre schématiquement un scénario de configuration du récepteur/décodeur avec un code parent.

L'utilisateur saisit, par l'intermédiaire de différentes interfaces de contrôle de son récepteur/décodeur (télécommande, clavier, etc.) la valeur courante du code parent. L'unité 328 de gestion d'informations personnelles récupère cette donnée (flèche 1a sur le dessin) et la fournit à l'unité 324 de gestion de contrôle parental (flèche 2a). L'unité 324 de gestion de contrôle parental vérifie la validité de la valeur de cette donnée et la mémorise.

La **figure 4b** illustre schématiquement un scénario de configuration du récepteur/décodeur avec des plages horaires de visualisation protégées par le code parent.

L'utilisateur saisit, par l'intermédiaire de différentes interfaces de contrôle de son récepteur/décodeur (télécommande, clavier, etc.) la valeur d'une plage horaire qu'il souhaite protéger par le code parent (flèche 1b sur le dessin). L'unité 328 de gestion d'informations personnelles récupère ces données, les mémorise et programme l'unité 326 de gestion d'alarmes avec les alarmes correspondantes (flèche 2b). L'unité 326 de gestion d'alarmes mémorise les alarmes correspondant au début et à la fin de la plage horaire à protéger par code parent. Lorsque l'heure courante sera équivalente à l'heure de début de plage horaire mémorisée, l'unité 326 de gestion d'alarmes avertira l'unité 324 de gestion de contrôle parental.

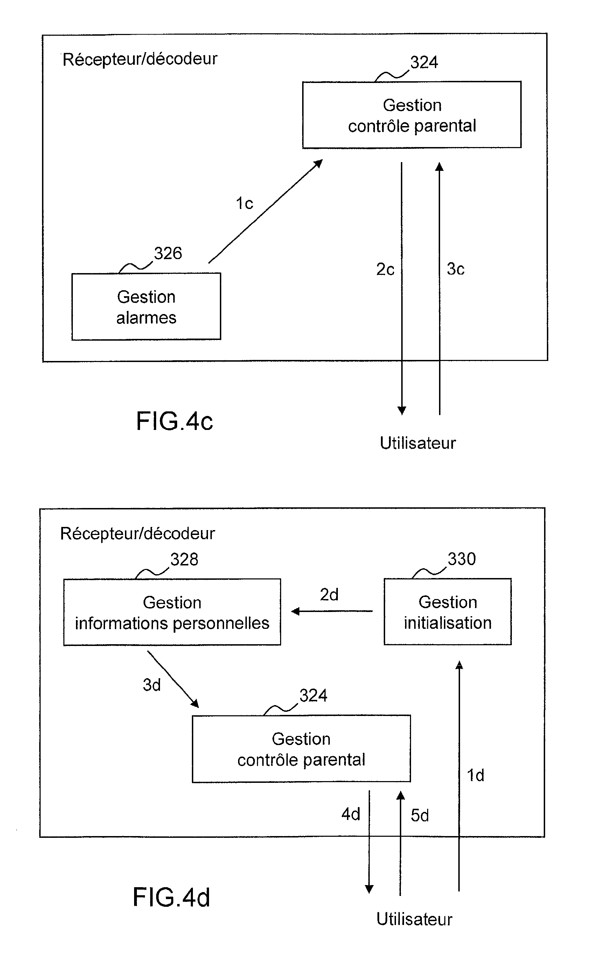

La **figure 4c** illustre schématiquement un scénario de contrôle du code parent lors de la visualisation de programmes, actuellement diffusés ou enregistrés, pendant une plage horaire protégée par code parent.

L'unité 326 de gestion d'alarmes avertit l'unité 324 de gestion de contrôle parental à l'heure de début de la plage horaire protégée par code parent (flèche 1c). L'unité 324 de gestion de contrôle parental invite alors l'utilisateur à saisir le code parent (flèche 2c). Tant que ce code n'est pas correctement saisi, la visualisation des programmes est suspendue. Lorsque l'utilisateur saisit le code parent, la valeur du code est vérifiée par l'unité 324 de gestion de contrôle parental (flèche 3c). A la suite de la saisie correcte du code parent, la visualisation des programmes est à nouveau permise.

La **figure 4d** illustre schématiquement un scénario de contrôle du code parent lors de la mise en marche du récepteur/décodeur pendant une plage horaire protégée.

L'utilisateur met en marche son récepteur/décodeur pendant une plage horaire protégée par code parent (flèche 1d), soit pour visualiser un programme, soit pour en enregistrer un. L'unité 330 de gestion d'initialisation initialise l'unité 328 de gestion d'informations personnelles (flèche 2d). Lors de son initialisation, l'unité 328 de gestion d'informations personnelles vérifie l'heure courante et les configurations préalablement choisies par l'utilisateur; toutes ces informations conduisent l'unité 328 de gestion d'informations personnelles à avertir l'unité 324 de gestion de contrôle parental (flèche 3d) pour faire une demande de saisie de code parent auprès de l'utilisateur (flèche 4d). L'utilisateur saisit le code parent (flèche 5d). La valeur du code parent est vérifiée par l'unité 324 de gestion de contrôle parental. Tant qu'un code parent correct n'est pas saisi, la visualisation et l'enregistrement des programmes sont impossibles ; à la suite de la saisie correcte du code parent, la visualisation ou l'enregistrement des programmes demandés est permise.

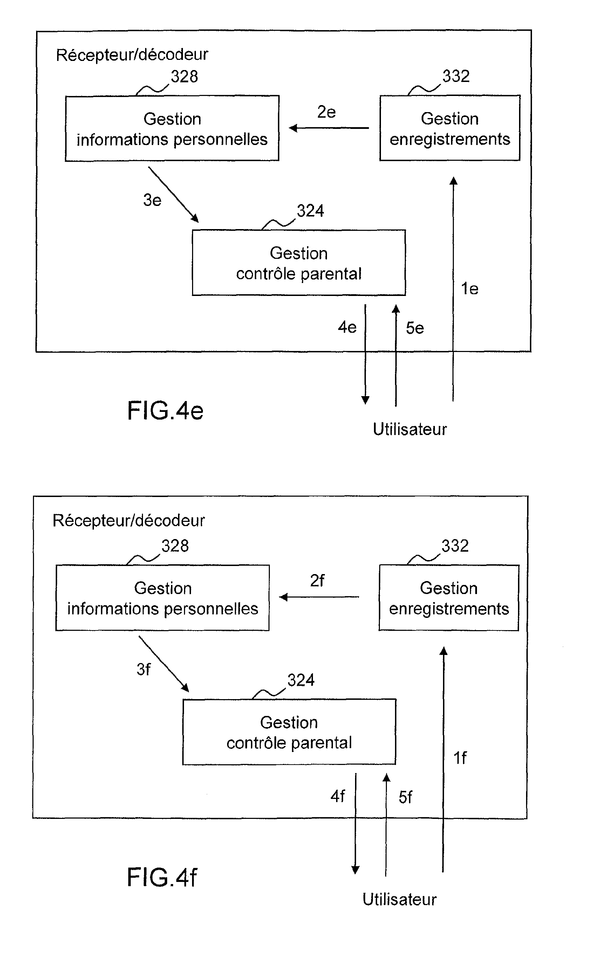

La **figure 4e** illustre schématiquement un scénario de contrôle du code parent lors de la programmation d'un enregistrement devant être effectué pendant une plage horaire protégée.

L'utilisateur programme un enregistrement devant être effectué pendant une plage horaire protégée par code parent (flèche 1e). L'unité 332 de gestion d'enregistrements avertit l'unité 328 de gestion d'informations personnelles qu'une demande d'enregistrement a été formulée (flèche 2e). L'unité 328 de gestion d'informations personnelles vérifie l'heure de l'enregistrement et les configurations préalablement choisies par l'utilisateur ; toutes ces informations conduisent l'unité 328 de gestion d'informations personnelles à avertir l'unité 324 de gestion de contrôle parental (flèche 3e) afin que cette dernière effectue une demande de saisie de code parent auprès de l'utilisateur.

L'unité 324 de gestion de contrôle parental invite alors l'utilisateur à saisir le code parent (flèche 4e). Tant que ce code n'est pas correctement saisi, la programmation de l'enregistrement n'est pas autorisée. Lorsque l'utilisateur saisit le code parent (flèche 5e), la valeur du code saisi est vérifiée par l'unité 324 de gestion de contrôle parental. A la suite de la saisie correcte du code parent, la programmation de l'enregistrement est permise.

Il est à noter qu'il suffit que l'enregistrement que l'utilisateur souhaite programmer ait lieu au moins en partie pendant une plage horaire protégée pour que le mécanisme de demande de code parent soit mis en oeuvre.

La **figure 4f** illustre schématiquement un scénario de contrôle du code parent lors de la visualisation d'un programme enregistré pendant une plage horaire protégée.

L'utilisateur demande à visualiser un programme enregistré dont l'horaire de diffusion initial recouvrait, au moins partiellement, une plage horaire protégée par code parent (flèche 1f). L'unité 332 de gestion d'enregistrements avertit l'unité 328 de gestion d'informations personnelles d'une demande de visualisation d'un programme enregistré (flèche 2f). L'unité 328 de gestion d'informations personnelles vérifie l'heure de diffusion initiale du programme et les configurations préalablement choisies par l'utilisateur ; toutes ces informations conduisent l'unité 328 de gestion d'informations personnelles à avertir l'unité 324 de gestion de contrôle parental (flèche 3f) afin que cette dernière effectue une demande de saisie de code parent au près de l'utilisateur.

L'unité 324 de gestion de contrôle parental invite alors l'utilisateur à saisir le code parent (flèche 4f). Tant que ce code n'est pas correctement saisi, la visualisation de l'enregistrement n'est pas autorisée. Lorsque l'utilisateur saisit le code parent (flèche 5f), la valeur du code saisi est vérifiée par l'unité 324 de gestion de contrôle parental. A la suite de la saisie correcte du code parent, la visualisation de l'enregistrement est permise.

## Revendications

1. Dispositif de contrôle d'accès dans un récepteur/décodeur (102), **caractérisé en ce qu'**il comporte des moyens (324, 326, 328, 330, 332) pour soumettre à un accès conditionnel l'utilisation du récepteur/décodeur pendant au moins une plage horaire définie par un utilisateur.

2. Dispositif selon la revendication 1, **caractérisé en ce qu'**il comporte des moyens (328) de gestion d'informations personnelles pour mémoriser le début et la fin de chacune desdites plages horaires et pour recevoir un code secret défini par un utilisateur, associé à chacune desdites plages horaires, lesdits codes secrets conditionnant l'utilisation du récepteur/décodeur (102) pendant les plages horaires associées.

3. Dispositif selon la revendication 2, **caractérisé en ce qu'**il comporte en outre des moyens (324) de gestion de contrôle parental adaptés à recevoir lesdits codes secrets en provenance desdits moyens (328) de gestion d'informations personnelles et à les mémoriser.

4. Dispositif selon la revendication 3, **caractérisé en ce que** lesdits moyens (324) de gestion de contrôle parental sont adaptés, en cours de visualisation, par un utilisateur, de programmes diffusés ou précédemment enregistrés par le récepteur/décodeur (102), lorsque l'heure de diffusion ou la plage horaire initiale d'enregistrement appartient au moins en partie à une desdites plages horaires, à inviter l'utilisateur à saisir le code secret associé à cette plage horaire, la visualisation étant suspendue tant que le code secret correct n'est pas saisi.

5. Dispositif selon la revendication 3 ou 4, **caractérisé en ce que** lesdits moyens (324) de gestion de contrôle parental sont adaptés, lorsqu'un utilisateur met en marche le récepteur/décodeur (102) pendant une desdites plages horaires, à inviter l'utilisateur à saisir le code secret associé à cette plage horaire, la visualisation et l'enregistrement de programmes étant impossibles tant que le code secret correct n'est pas saisi.

6. Dispositif selon la revendication 3, 4 ou 5, **caractérisé en ce que** lesdits moyens (324) de gestion de contrôle parental sont adaptés, lorsqu'un utilisateur programme sur le récepteur/décodeur (102) un enregistrement devant avoir lieu au moins en partie pendant au moins une desdites plages horaires, à inviter l'utilisateur à saisir les codes secrets associés aux plages horaires concernées, la programmation étant impossible tant que les codes secrets corrects ne sont pas saisis.

7. Dispositif selon l'une quelconque des revendications 3 à 6, **caractérisé en ce qu'**il comporte en outre des moyens (326) de gestion d'alarme adaptés à mémoriser l'heure de début d'au moins une desdites plages horaires et à avertir lesdits moyens (324) de gestion de contrôle parental lorsque l'heure courante est équivalente à l'heure mémorisée.

8. Dispositif selon la revendication 2, **caractérisé en ce qu'**il comporte en outre des moyens (330) de gestion d'initialisation adaptés à initialiser lesdits moyens (328) de gestion d'informations personnelles lorsqu'un utilisateur met en marche le récepteur/décodeur (102).

9. Dispositif selon la revendication 2, **caractérisé en ce qu'**il comporte en outre des moyens (332) de gestion d'enregistrement adaptés à avertir lesdits moyens (328) de gestion d'informations personnelles lorsqu'un utilisateur programme un enregistrement sur le récepteur/décodeur (102).

10. Récepteur/décodeur (102), **caractérisé en ce qu'**il comporte un dispositif de contrôle d'accès selon l'une quelconque des revendications précédentes.
